# EUROPÄISCHE PATENTSCHRIFT

(11) **EP 1 249 174 B1**
(45) Veröffentlichungstag und Bekanntmachung des Hinweises auf die Patenterteilung: **26.10.2005**
(21) Anmeldenummer: 02007876.2
(22) Anmeldetag: 09.04.2002
(51) Int. Cl.: A23G 1/00, A23G 1/04, A23G 1/18

(54) **Verfahren und Vorrichtung zum kontinuierlichen Aufbereiten von zu verarbeitenden fetthaltigen Massen**
Process and apparatus for continuous treatment of processed fatty masses
Procédé et appareil de traitement continu pour le mise en oeuvre de masses grasses

(30) Priorität: 12.04.2001 DE 10118354
(43) Veröffentlichungstag der Anmeldung: 16.10.2002
(73) Patentinhaber: Sollich KG, 32105 Bad Salzuflen (DE)
(72) Erfinder: Ridderbusch, Gerhard, 32105 Bad Salzuflen (DE)
(74) Vertreter: Rehberg Hüppe + Partner

(56) Entgegenhaltungen:
- EP-A- 0 521 205
- WO-A-00/72695
- WO-A-01/06863
- WO-A-98/30108
- DE-A- 2 602 877

## Beschreibung

Die Erfindung betrifft ein Verfahren zum kontinuierlichen Aufbereiten von zu verarbeitender Schokolademasse mit einer Verarbeitungstemperatur von etwa 31 bis 35 °C, insbesondere 32 bis 35 °C, indem thermisch behandelte Impfkristalle in einer Masse suspendiert werden und diese Impfkristalle enthaltende Suspension der vorgekühlten Schokolademasse hinzugefügt und mit dieser schonend, homogen und kontinuierlich vermischt wird. Es wird weiterhin eine Vorrichtung zum kontinuierlichen Aufbereiten von zu verarbeitender Schokolademasse mit einer Verarbeitungstemperatur von etwa 31 bis 35 °C, insbesondere 32 bis 35 °C, aufgezeigt, mit einem Tank für flüssige erwärmte Schokolademasse, einer eine Förderpumpe aufweisenden Förderleitung für die Schokolademasse, die vom Tank zu einem Verbraucher führt und in der ein Wärmetauscher angeordnet ist, und mit einer eine Dosierpumpe aufweisenden Leitung für die kontinuierliche Einbringung einer Impfkristalle enthaltenden Suspension in die Förderleitung für die Schokolademasse. Bei dieser Impfkristallisation geht es darum, nicht wie bisher die Vorkristallisation durch eine besondere Temperaturführung in der Temperiermaschine mit Abkühlung und Wiedererwärmung zu erzeugen, sondern Impfkristalle in die Förderleitung für die Schokolademasse einzubringen, um auf diese Weise die Vorkristallisation der Schokolademasse zu erreichen. Obwohl in der vorliegenden Anmeldung durchgängig von Schokolademasse die Rede ist, kann das Verfahren und die Vorrichtung auch auf die Aufbereitung ähnlicher kakaobutterhaltiger oder auch anderer fetthaltiger Massen angewendet werden. Sofern es sich um die Aufbereitung von Schokolademasse handelt, geht es darum, die Vorkristallisation in der Art und Weise zu erreichen, dass am hergestellten Produkt nach der Kristallisation all jene bekannten gewünschten Eigenschaften, wie Glanz, knackiger Bruch, Vermeidung einer Fettreifbildung u. dgl. erreicht werden.

Aus der PCT-Anmeldung mit der internationalen Veröffentlichungsnummer WO 00/72695 A1 ist ein Verfahren und eine Vorrichtung der eingangs beschriebenen Art bekannt. Es wird dort ein Verfahren zur Herstellung von fettschmelzebasierten Impfkristallsuspensionen mit hohem β_{VI}-Modifikationsanteil sowie deren Einsatz bei der Impfkristallisation von fettbasierten, disperse Feststoffpartikel enthaltenden Suspensionen, wie Schokolade, schokoladeähnliche Massen o. dgl. beschrieben. In der Impfkristallsuspension soll der Gesamtkristallgehalt, der Anteil an hochschmelzenden β_{VI}-Kristallmodifikation sowie die mittlere Kristallgröße einstellbar sein. Zu diesem Zweck wird ein kaltgesprühtes Fettpulver einer stufenweisen thermischen Konditionierung derart unterzogen, dass ohne Verklumpung der Pulverteilchen eine Modifikationsumwandlung des polymorphen Fettsystems so weit voranschreitet, dass die thermisch hochstabilen β_{VI}-Kristalle zu einem Anteil von größer/gleich 10 % ausgebildet werden. Das derart konditionierte Fettpulver wird in einer kristallfreien, auf etwa 1 bis 2 °C unterhalb der Schmelzenthalpie Peak-Minimaltemperatur der β_{VI}-Kristallmodifikation temperierten Fettschmelze suspendiert. Im Falle der Aufbereitung einer Schokolademasse wird als Fettschmelze Kakaobutter eingesetzt. Diese Fettpulversuspension wird unter definierter Abstimmung von mechanischen und thermischen Bedingungen sowie der Verweilzeit in einer Scher-/Dehnströmung behandelt, bis zur Erreichung der einzustellenden Charakteristika Gesamtkristallgehalt, β_{VI}-Modifikationsanteil und mittlerer Kristallgröße. Die somit in sehr aufwändiger Weise erzeugte Impfkristallsuspension wird in den Produktstrom einer vorzukristallisierenden Schokolade oder schokoladeähnlichen Masse mit Impfkristallanteilen zwischen 0,01 und 0,2 % (bezogen auf Gesamtmasse) gleichmäßig zudosiert und danach im Produktstrom schonend, homogen und kontinuierlich vermischt. Die Vorrichtung zur Durchführung des Verfahrens benötigt einen Kaltsprühturm, eine Temperierkammer, einen Suspensions-Rührbehälter, einen Scher-/Dehnströmungsmodul, eine Pumpe und einen statischen Mischer. Außerdem ist ein Tank für die Bereitstellung der erwärmten flüssigen Schokolademasse und eine von dort zum Verbraucher führende Förderleitung mit Förderpumpe erforderlich. In dieser Förderleitung ist ein Wärmetauscher und diesem nachgeschaltet ein statischer Mischer vorgesehen. Nachteilig daran ist der erhebliche maschinelle Aufwand und die aufwändige Impfkristallherstellung und -konditionierung. Als zusätzlicher Rohstoff zu der Schokolademasse wird Kakaobutter benötigt. Durch die Verwendung von zwei unterschiedlichen Rohstoffen erhöht sich der maschinelle Aufwand weiter, da beide Rohstoffe getrennt aufgeschmolzen und auch getrennt gekühlt werden müssen. Problematisch erscheint auch die Verteilung der aufbereiteten Schokolademasse auf verschiedene Verbraucher bei einem Hersteller von Schokoladeprodukten.

Die Erfindung baut auf der vorbeschriebenen Problematik auf und zielt darauf ab, ein Verfahren und eine Vorrichtung bereitzustellen, bei denen es möglich ist, eine stabile wärmebehandelte und vorkristallisierte Schokolademasse mit einer für den Verbraucher geeigneten Verarbeitungstemperatur von etwa 31 bis 35 °C, insbesondere 32 bis 35 °C, kontinuierlich bereitzustellen, und zwar mit geringem maschinellen Aufwand und unter praxisnahen Produktionsbedingungen.

Erfindungsgemäß wird dies bei dem Verfahren der eingangs beschriebenen Art dadurch erreicht, dass die Impfkristalle in einer Teilmenge der Schokolademasse suspendiert werden.

Die Erfindung geht von dem Gedanken aus, die Herstellung der Impfkristalle und die Aufbereitung der Schokolademasse voneinander zu trennen. Die Herstellung der Impfkristalle kann von speziell dafür eingerichteten Herstellbetrieben oder zumindest doch zentral für verschiedene Verbraucher innerhalb eines schokoladeverarbeitenden Betriebes erfolgen. Dadurch vermindert sich der maschinelle Aufwand pro einzelnem Verbraucher bereits erheblich. Die verbleibende Aufbereitung der Schokolademasse an jedem einzelnen Verbraucher gestaltet sich einfacher, und zwar mit einem maschinellen Aufwand, der dem bisherigen Aufwand vergleichbar ist. Damit wird zugleich die Aufbereitung der Schokolademasse einfacher und störungsunanfälliger. Sie wird den in der Praxis herrschenden Bedingungen und Möglichkeiten in besonderer Weise gerecht. Es ist sogar möglich, herkömmliche oder bereits vorhandene Temperiermaschinen bei dem neuen Verfahren einzusetzen, wobei es lediglich erforderlich ist, die Temperiermaschine geringfügig anders zu steuern, als dies bisher üblich war. Die Verwendung herkömmlicher Temperiermaschinen gestattet zugleich die Umschaltung von Impfkristall-Vorkristallisation zu herkömmlicher Temperierung. Damit ergibt sich auch vorteilhaft eine Nachrüstbarkeit bestehender Anlagen. Besonders wichtig ist es, die Impfkristalle in einer Teilmenge der Schokolademasse zu suspendieren. Damit wird die Bereitstellung und Handhabung einer gesonderten Fettschmelze, insbesondere von Kakaobutter, entbehrlich. Die bei dem erfindungsgemäßen Verfahren eingesetzten Impfkristalle werden von besonderen Herstellern oder zumindest zentral in schokoladeverarbeitenden Betrieben hergestellt, so dass bei größeren Mengen die Herstellbedingungen für die Impfkristalle in Pulverform besser und leichter eingehalten werden können. Der einzelne Verbraucher, beispielsweise die einzelne Überziehmaschine, wird damit wirkungsvoll entlastet. Insoweit ist es nur noch erforderlich, die Impfkristalle enthaltende Suspension in die Förderleitung für die Schokolademasse einzubringen und mit der Schokolademasse schonend, homogen und kontinuiuerlich zu vermischen. Dies kann vorteilhaft in der Mischstufe einer herkömmlichen Temperiermaschine geschehen, wobei ohne zusätzlichen Aufwand die bisherige Nachwärmstufe in eine Mischstufe umfunktioniert werden kann. Das erfindungsgemäße Verfahren zielt nicht darauf ab, eine Impfkristallsuspension mit hohem β_{VI}-Modifikationsanteil zu erzeugen, sondern eine solche Vorkristallisierung innerhalb der Schokolademasse zu erreichen, dass die üblichen bekannten Erfordernisse an einem hergestellten Produkt mit auskristallisierter Schokolademasse erreicht werden. Dabei wird eine Vergrauung der Schokoladenoberfläche wie auch ein Fettreif vermieden. Die auskristallisierte Schokolademasse weist eine glänzende Oberfläche und einen knackigen Bruch auf. Bei der Auskristallisierung entstehen solche Kristalle, die im Mund leicht schmelzen, wie es der Verbraucher wünscht. Das neue Verfahren ist darauf gerichtet, eine Vorkristallisation in der Weise zu bewirken, dass am fertigen Produkt im wesentlichen β_{V}-Kristalle vorliegen. Diese Kristallform ergibt gute Ausformbarkeit, guten Glanz und lange Lagerbeständigkeit.

Das neue Verfahren kann auch in der Weise durchgeführt werden, dass die Impfkristalle durch eine Scher-/Dehnströmungsbehandlung von Kakaobutter erzeugt werden und diese Kakaobutterkristallsuspension in der Teilmenge der Schokolade suspendiert wird. Bei dieser Möglichkeit entfallen die Probleme, die mit der Lagerung, Dosierung und Handhabung von Kristallpulver verbunden sind. Die ohnehin in vielen Fällen vorhandene Kakaobutter kann direkt zur Erzeugung der Impfkristalle unter Einsatz eines Scherkristallisators genutzt werden. Die Kakaobutter wird dabei in der Regel in mehrfachen Umläufen durch den Scherkristallisator geführt, bis die notwendige Menge an Kristallen erzeugt ist. Durch die Rückführung und Verweilzeit in einem angeschlossenen Vorratsbehälter erhält die Masse auch hinreichend Zeit zur Ausbildung der gewünschten stabilen Kristallmodifikation. Auch die gewünschte Konzentration der Kakaobutterkristallsuspension kann auf diesem Wege erreicht werden. Durch die dann eingesetzte Kakaobutterkristallisation wird gleichsam eine Art Vorsuspension gebildet, die dann ihrerseits wiederum der Teilmenge der Schokolade hinzugefügt und in dieser suspendiert wird. Damit gestaltet sich auch die gleichmäßige Verteilung der Impfkristalle einfacher.

Die Suspension wird mit Impfkristallanteilen > 0,2 % (bezogen auf Gesamtmasse) eingesetzt. Damit werden im Vergleich zum Stand der Technik zwar mehr Impfkristalle in die Suspension eingebracht. Es handelt sich aber immer noch um einen relativ geringen Anteil bezogen auf die Gesamtmasse aus Suspension und Schokolademasse. Durch die Einbringung der Impfkristalle in einen Teil der Schokolademasse wird bereits dort eine Anregung zur Vermehrung der Impfkristalle gesetzt. Dabei kommt es darauf an, diese eingebrachten und die sich bildenden Impfkristalle in der Suspension fein und gleichmäßig zu verteilen. Hierzu werden verschiedene Mischeinrichtungen eingesetzt, die in der Leitung angeordnet sind, mit der letztendlich die Suspension der Förderleitung der Schokolademasse zugeführt wird.

Besonders vorteilhaft ist es, wenn die Suspension einer solchen Teilmenge der Schokolademasse hinzugefügt wird, die bereits Impfkristalle enthält. Dies bedeutet, dass die Leitung, in der die Impfkristalle hinzugefügt und suspendiert werden, eingangsseitig mit dem Teil der Förderleitung verbunden wird, der zum Verbraucher führt. Damit wird ein Kreislauf geschaffen, durch den die Schokolademasse auch mehrfach geführt werden kann, so dass damit eine Anreicherung der Impfkristalle oder eine genaue Einstellung des Anteils an Impfkristallen möglich ist.

Bei dem neuen Verfahren entsteht der besondere Vorteil, dass einerseits die Verwendung herkömmlicher Temperiermaschinen möglich ist, aber andererseits die Schokolademasse vor der Hinzufügung der Impfkristalle enthaltenden Suspension lediglich auf etwa 31 bis 35 °C, insbesondere 32 bis 34,5 °C, gekühlt wird. Es ist also nicht mehr erforderlich, die gesamte Schokolademasse auf etwa 28 bis 29 °C herabzukühlen, wie dies bisher erforderlich war.

Die homogene Vermischung der Impfkristalle enthaltenden Suspension mit der Schokolademasse kann ohne nennenswerte Änderung der Temperatur erfolgen. Damit wird der bisherige Wasserkreislauf für die Nachwärmstufe einer Temperiermaschine an sich entbehrlich. Er kann aber auch beibehalten bleiben und beispielsweise gedrosselt betrieben werden. Eine gesonderte Kühlung innerhalb der Leitung für die Suspension ist nicht erforderlich.

Eine Vorrichtung zur Durchführung des Verfahrens kennzeichnet sich erfindungsgemäß dadurch, dass als Wärmetauscher eine herkömmliche Temperiermaschine mit einer im wesentlichen nur eine Kühlstufe und eine Mischstufe bereitstellenden Steuerung vorgesehen ist, und dass die die Dosierpumpe aufweisende Leitung für die kontinuierliche Einbringung der Impfkristalle enthaltenden Suspension in die Förderleitung für die Schokolademasse ausgangsseitig an den Beginn der Mischstufe der herkömmlichen Temperiermaschine angeschlossen ist.

Bei der neuen Vorrichtung wird kein gesondert ausgebildeter Wärmetauscher eingesetzt, sondern eine herkömmliche Temperiermaschine, die eine oder mehrere Kühlstufen und eine Nachwärmstufe aufweist. Solche Temperiermaschinen sind bekannt. Die der Nachwärmstufe zugekehrte letzte Kühlstufe kann als Kristallisationsstufe ausgebildet sein. Die Wasserkreisläufe dieser Temperiermaschine können sehr viel einfacher eingerichtet und gesteuert werden. Die Benutzung der herkömmlichen Temperiermaschine erfordert lediglich eine etwas andersartige Steuerung. Dabei fungieren die bisherige Kühlstufe oder die bisherigen Kühlstufen als eine oder mehrere Kühlstufen, wobei jedoch die Kühlung vergleichsweise weniger intensiv und mit Endtemperaturen im Bereich von etwa 31 bis 35 °C, insbesondere 32 bis 33 °C, eingesetzt werden können. Der Wasserkreislauf für die Nachwärmstufe kann vollständig entfallen, gedrosselt als Schutzheizung betrieben oder auch abgesperrt werden, so dass aus der Nachwärmstufe eine Mischstufe wird. Die ohnehin in der Temperiermaschine vorhandenen Rührwerkzeuge fungieren dann als Mischelemente, um die Impfkristalle enthaltende Suspension mit der durch die Kühlstufe geführten Schokolademasse homogen schonend und gleichmäßig kontinuierlich zu vermischen. Zu diesem Zweck ist die die Dosierpumpe aufweisende Leitung für die kontinuierliche Einbringung der Impfkristalle enthaltenden Suspension in die Förderleitung für die Schokolademasse ausgangsseitig, also endseitig an den Beginn der umfunktionierten Nachwärmstufe der herkömmlichen Temperiermaschine angeschlossen. Der Anschluss kann auch am Ende der Kühlstufe oder am Übergang zwischen der Kühlstufe zu der Mischstufe erfolgen. Der Einsatz einer herkömmlichen Temperiermaschine, lediglich anders gesteuert, bedeutet einen vergleichsweise geringen maschinellen Aufwand. Auch die Bereitstellung der Leitung und die Dosierung der Suspension ist nicht besonders aufwändig, da die Herstellung der Impfkristalle von der Aufbereitung der Schokolademasse getrennt wird. Die Verwendung einer herkömmlichen Temperiermaschine ermöglicht es zugleich, von Impfkristallisation auf herkömmliche Temperierung umzuschalten und umgekehrt. Damit werden bestehende Anlagen leicht nachrüstbar. Sie sind ebenso einfach zu handhaben wie herkömmliche Anlagen, da der Hauptstrom der Schokolademasse unverändert beibehalten bleibt. Die neue Vorrichtung lässt sich bequem an jedem Verbraucher dezentral einsetzen.

Die Leitung für die kontinuierliche Einbringung der Suspension in die Förderleitung für die Schokolademasse kann Bestandteil eines Kreislaufs sein, in dem bei mehrfachem Durchlauf eine Anreicherung der Impfkristalle erfolgt. Diese bevorzugte Ausführungsform gestattet die genaue Einstellung des Anteils der Impfkristalle in der Leitung und deren Dosierung zu der Schokolademasse. Es versteht sich, dass bei dieser Ausführungsform die Leitung für die kontinuierliche Einbringung der Suspension in die Förderleitung für die Schokolademasse eingangsseitig an den Teil der Förderleitung angeschlossen ist, der von der Temperiermaschine zum Verbraucher führt. Aber auch dann, wenn ein mehrfacher Durchlauf des Kreislaufes nicht beabsichtigt ist oder genutzt wird, ist die beschriebene eingangsseitige Verbindung der Leitung mit dem Teil der Förderleitung möglich, der von der Temperiermaschine zum Verbraucher führt.

Eine andere Möglichkeit besteht darin, dass die Leitung für die kontinuierliche Einbringung der Suspension in die Förderleitung für die Schokolademasse eingangsseitig an das Ende der Kühlstufe der Temperiermaschine angeschlossen ist. Am Ende der Kühlstufe hat die Schokolademasse eine Temperatur in der Größenordnung von 31 bis 35 °C, insbesondere von 32 bis 34 °C. Diese Temperatur ist geeignet, die Impfkristalle in dieser Leitung hinzuzufügen, so dass eine Schädigung der Impfkristalle vermieden wird und ein Anreiz zur Vermehrung der Kristalle in der Leitung gesetzt ist.

Eine weitere Möglichkeit der Ausbildung der Leitung besteht darin, dass die Leitung für die kontinuierliche Einbringung der Suspension in die Förderleitung für die Schokolademasse eingangsseitig an den Tank für die flüssige erwärmte Schokolademasse angeschlossen ist. Bei dieser Ausführungsform wird zwar der apparative Aufwand etwas erhöht. Da die im Tank befindliche aufgeschmolzene Schokolademasse eine Temperatur in der Größenordnung von 45 °C aufweist, ist es erforderlich, in der Leitung einen gesonderten Wärmeaustauscher vorzusehen, mit dem der für den Aufbau der Suspension bestimmte Teil der Schokolademasse auf 31 bis 35 °C, insbesondere 32 bis 35 °C, herabgekühlt wird.

Die Erfindung wird anhand bevorzugter Ausführungsbeispiele weiter erläutert und beschrieben. Es zeigen:
- Fig. 1: einen Schaltplan einer ersten Ausführungsform der Vorrichtung zum kontinuierlichen Aufbereiten von zu verarbeitender Schokolademasse,
- Fig. 2: einen Schaltplan einer zweiten Ausführungsmöglichkeit,
- Fig. 3: einen Schaltplan einer dritten Ausführungsmöglichkeit, und
- Fig. 4: einen Schaltplan einer weiteren Ausführungsmöglichkeit.

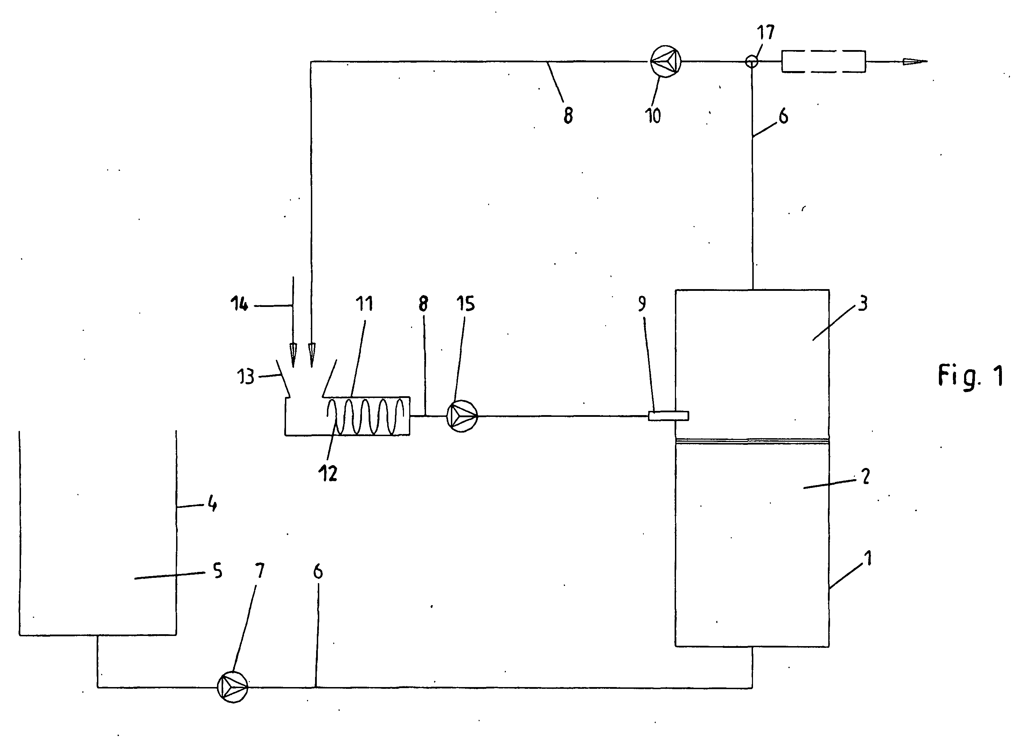

In Fig. 1 ist schematisch eine Temperiermaschine 1 dargestellt. Es kann sich insbesondere um einen Scheibentemperer handeln. Wichtig ist, dass die Temperiermaschine 1 eine Kühlstufe 2 und eine Mischstufe 3 aufweist. Die Temperiermaschine 1 kann auch mehrere Kühlstufen 2 hintereinander besitzen, also mit mehreren Kühlkreisläufen getrennt steuerbar sein. Derartige Einzelheiten sind im Stand der Technik bekannt und hier aus Übersichtlichkeitsgründen weggelassen. Bei der Mischstufe kann es sich um die im Stand der Technik bekannte Nachwärmstufe handeln, die lediglich umfunktioniert ist. Üblicherweise wird ein solcher Scheibentemperer aus verschiedenen Etagen aufgebaut. Er weist von der Schokolademasse durchströmte Massekammern und von dem jeweiligen Temperiermedium des betreffenden Temperierkreislaufes durchströmte Kühl- bzw. Wärmekammern auf. Im übrigen besitzt die Temperiermaschine 1 nicht dargestellte Rührwerkzeuge, die umlaufend angetrieben werden. Diese Rührwerkzeuge dienen innerhalb der Kühlstufe 2 der Durchmischung der Schokolademasse und deren temperaturmäßigem Ausgleich, während sie in der Mischstufe 3 Mischfunktion haben, da hier eine nennenswerte Temperaturveränderung der Schokolademasse nicht mehr stattfindet. Weiterhin ist, wie bei herkömmlichen Anlagen auch, ein Tank 4 vorgesehen, der flüssige Schokolademasse 5 aufnimmt bzw. bereitstellt. Die aufgeschmolzene Schokolademasse 5 im Tank 4 besitzt eine Temperatur in der Größenordnung von 45 °C.

Von dem Tank 4 führt eine Förderleitung 6 über die Temperiermaschine 1 bis zu einem nicht dargestellten Verbraucher, beispielsweise einer Überziehmaschine, einer Tafelgießmaschine o. dgl.. In dem Teil der Förderleitung 6, der von dem Tank 4 zu der Temperiermaschine 1 führt, ist eine Förderpumpe 7 vorgesehen. Von dem Teil der Förderleitung 6, der von der Temperiermaschine 1 ausgeht und zum Verbraucher führt, zweigt eine Leitung 8 ab. Die Leitung 8 mündet mit einem Einweg-Impfventil 9 an der Mischstufe 3 der Temperiermaschine 1. Die Leitung 8 bildet so mit Teilen der Förderleitung 6 einen Kreislauf, durch den Schokolademasse auch mehrfach umgewälzt werden kann. In der Leitung 8 ist eine erste Dosierpumpe 10 angeordnet. In der durch Pfeilangaben dargestellten Strömungsrichtung ist ein offener Mischer 11 mit angetriebenen Mischwerkzeugen 12 vorgesehen. Der Mischer 11 besitzt einen Trichter 13, so dass an dieser Stelle gemäß Pfeil 14 Impfkristalle in Pulverform dem Teil der Schokolademasse hinzugefügt werden können, der durch die Leitung 8 geführt wird. Dem offenen Mischer 11 ist eine zweite Dosierpumpe 15 nachgeschaltet, durch die die Suspension mit den Impfkristallanteilen über das Einweg-Impfventil 9 in die Mischstufe 3 gelangt.

Mit dieser Anlage ist es möglich, das Verfahren zum kontinuierlichen Aufbereiten von zu verarbeitender Schokolademasse mit einer Verarbeitungstemperatur am Verbraucher von etwa 31 bis 35 °C, insbesondere 32 bis 35 °C, durchzuführen. Die im Tank 4 erschmolzene Schokolademasse 5 wird, wie bisher auch, vermittels der Förderpumpe 7 durch eine Temperiermaschine 1 hindurchgefördert. Die Schokolademasse wird dabei in der Kühlstufe 2 auf eine Temperatur von etwa 31 bis 35 °C, insbesondere 32 bis 35 °C, gekühlt. Mit dieser Temperatur tritt die Schokolademasse in die Mischstufe 3 über, in der sich die Temperatur nicht mehr nennenswert verändert. Die Temperatur der Schokolademasse kann in der Kühlstufe 2 auch geringfügig weiter erniedrigt werden, um der durch die Mischwerkzeuge in der Mischstufe eingetragenen Wärmemenge Rechnung zu tragen, so dass letztlich die vorgesehene Verarbeitungstemperatur am Verbraucher erreicht wird. In dem Teil der Förderleitung 6, der von der Temperiermaschine 1 zum Verbraucher führt, kann ein Umschaltventil 17 vorgesehen sein, welches es ermöglicht, auf die Verteilung der Schokolademasse zum Verbraucher bzw. in die Leitung 8 Einfluss zu nehmen. Damit kann insbesondere beim Anfahren der Anlage ein Teil der Schokolademasse in den Kreislauf der Leitung 8 eingebracht werden, bis dort die vorgesehene Konzentration der Impfkristalle vorhanden ist, wie es für den Beginn der Produktion am Verbraucher vorgesehen bzw. sinnvoll ist. Das Umschaltventil 17 ist jedoch nicht unbedingt erforderlich. Es kann auch durch ein einfaches T-Stück ersetzt werden. Die Dosierpumpe 10 fördert einen Teil der Schokolademasse in der Leitung 8. Gemäß Pfeil 14 werden am Trichter 13 des offenen Mischers 11 die Impfkristalle in Pulverform in der erforderlichen Menge zugegeben und mit den Mischwerkzeugen 11 in der Schokolademasse verteilt. Dabei werden sich weitere Impfkristalle in der Schokolademasse bilden. Diese Schokolademasse wird mit Hilfe der weiteren Dosierpumpe 15 über das Einweg-Impfventil 9 der Strömung der Schokolademasse in der Mischstufe 3 zugegeben. Die Impfkristalle enthaltende Suspension wird dann in der Mischstufe 3 schonend, homogen und kontinuierlich mit der aus der Kühlstufe 2 übertretenden Schokolademasse vermischt, so dass aus der Temperiermaschine 1 vorkristallisierte Schokolademasse austritt und über die Förderleitung 6 dem Verbraucher zugeführt wird. Damit ist auch erkennbar, dass die Dosierpumpe 10 Schokolademasse ansaugt, die bereits Impfkristalle enthält, also teilweise vorkristallisiert ist. Während des Umlaufes in dem Kreislauf vermehren sich diese Impfkristalle, was allerdings noch nicht ausreicht, um einen hinreichenden Kristallisiergrad der Schokolademasse in der Mischstufe 3 zu erzielen. Aus diesem Grunde ist es erforderlich, gemäß Pfeil 14 kontinuierlich weitere Impfkristalle zuzugeben.

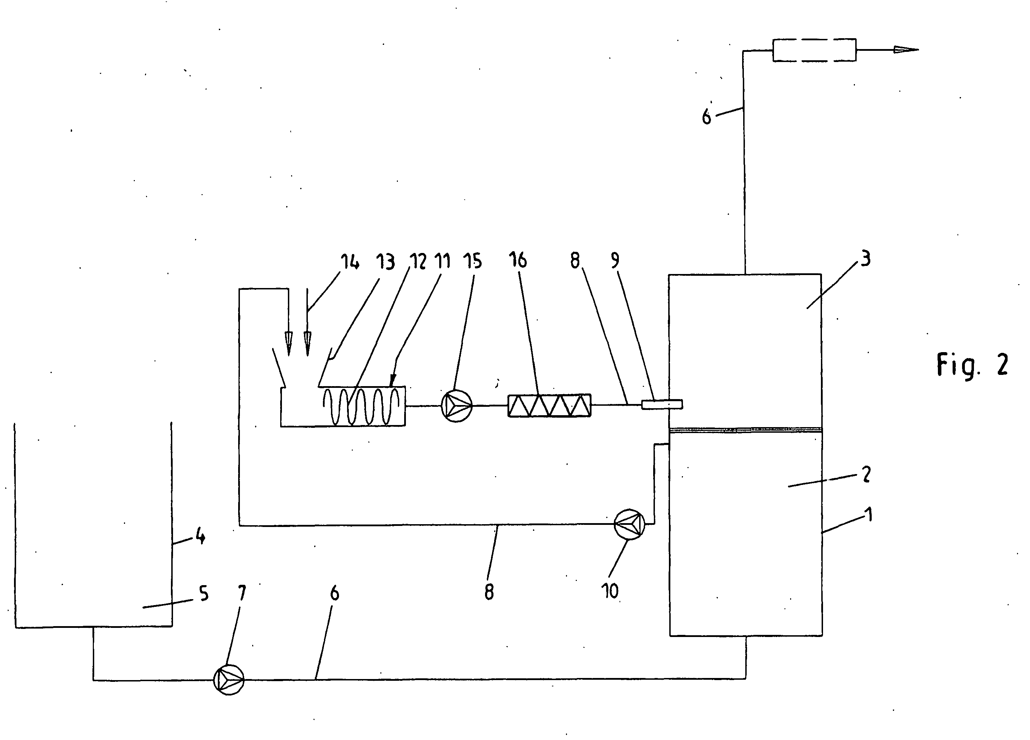

Die in Fig. 2 dargestellte zweite Ausführungsform der Anlage ist hinsichtlich der Anordnung der Temperiermaschine 1 und des Tanks 4 sowie der Förderleitung 6 zum Verbraucher ähnlich ausgebildet wie das Ausführungsbeispiel der Fig. 1. Zusätzlich ist hier der zweiten Dosierpumpe 15 ein statischer Mischer 16 nachgeschaltet. Der statische Mischer besitzt keine angetriebenen oder sich drehenden Teile. Der statische Mischer 16 dient zur weiteren gleichmäßigen Verteilung der Impfkristalle in der Suspension, bevor diese in die Mischstufe 3 gelangt. Ansonsten ist die Leitung 8 hier eingangsseitig an anderer Stelle angeschlossen, nämlich am Ende der Kühlstufe 2 der Temperiermaschine 1. Aus diesem Grunde wird auch kein Kreislauf gebildet, sondern es ist lediglich möglich, einen Teil der Schokolademasse am Ende der Kühlstufe 2 aus der Temperiermaschine 1 zu entnehmen, durch die Leitung 8 zu schicken, mit den Impfkristallen gemäß Pfeil 14 anzureichern und am Beginn der Mischstufe 3 wieder in die Schokolademasse einzubringen.

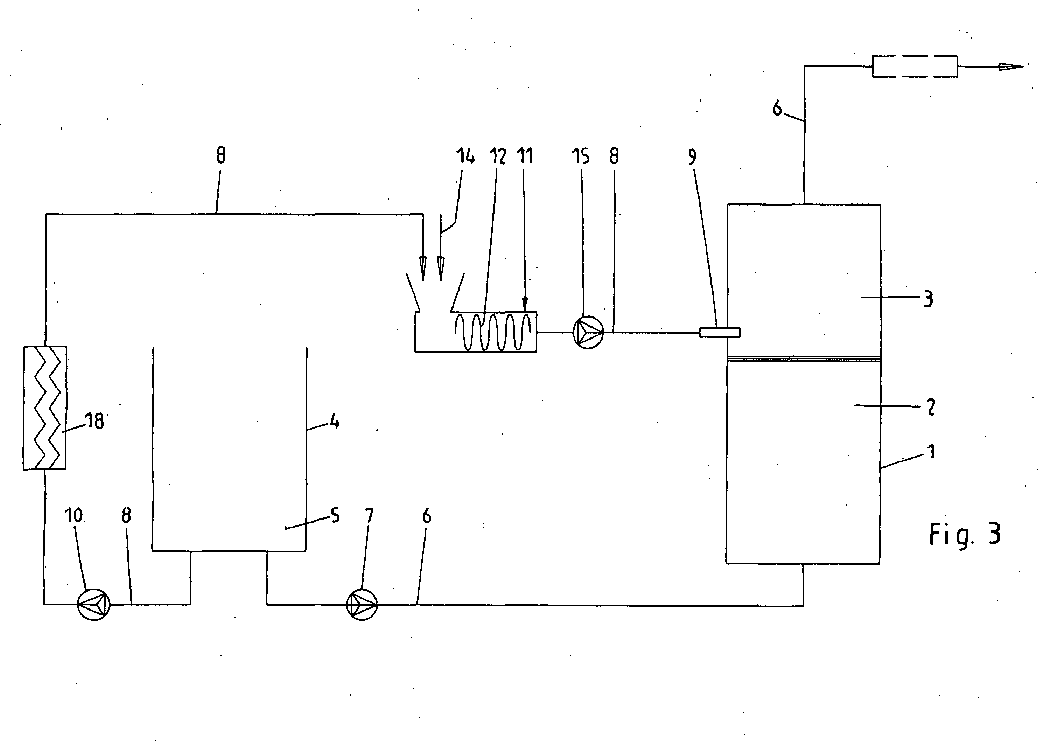

Fig. 3 zeigt eine weitere Ausbildung der wesentlichen Teile der Vorrichtung. Insoweit kann auch auf die vorangehende Beschreibung verwiesen werden. Die Leitung 8 ist hier lediglich eingangsseitig anders angeschlossen, nämlich direkt an den Tank 4 für die flüssige Schokolademasse 5. Über die Dosierpumpe 10 wird in der Leitung 8 ein Teil der Schokolademasse einem Wärmetauscher 18 zugeführt, mit dessen Hilfe die Schokolademasse 5 in der Leitung 8 auf etwa 31 bis 35 °C, insbesondere 32 bis 35 °C, herabgekühlt wird, bevor gemäß Pfeil 14 die Impfkristalle in Pulverform zugegeben werden. Auch hier endet die Leitung 8 ausgangsseitig an dem Beginn der Mischstufe 3 der Temperiermaschine 1.

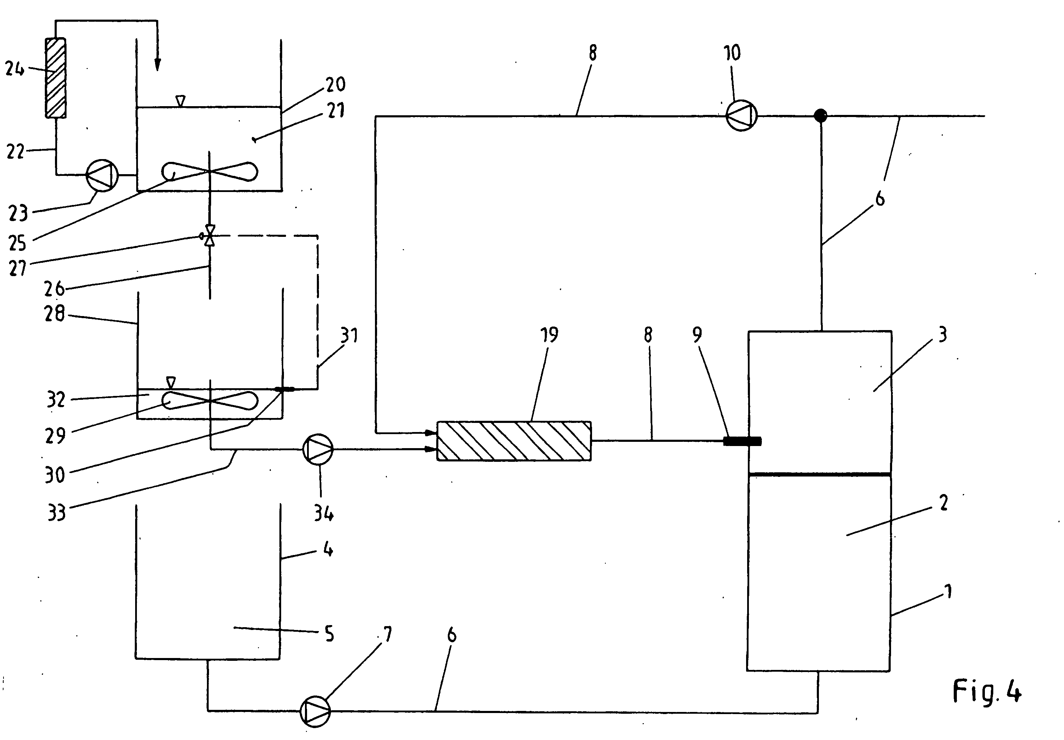

Fig. 4 zeigt eine weitere Ausführungsmöglichkeit einer geeigneten Vorrichtung. Hinsichtlich des Einsatzes, der Ausbildung und der Schaltung der Temperiermaschine 1 kann auf die vorangehenden Ausführungsformen verwiesen werden. Die Dosierpumpe 10 zweigt aus der Förderleitung 6 eine Teilmenge Schokolademasse ab und fördert diese zu einem Mischer 19, der hier als statischer Rohrmischer ausgebildet ist, also keine bewegten oder angetriebenen Elemente besitzt. Von dem Mischer 19 führt die Leitung 8 zu dem Einweg-Impfventil 9 an der Temperiermaschine 1.

Es ist ein Vorratstank 20 vorgesehen, in dem sich Kakaobutter 21 befindet. An den Vorratstank 20 ist im Kreislauf eine Leitung 22 mit Pumpe 23 angeschlossen. In der Leitung 22 ist ein Scherkristallisator 24 angeordnet, der in an sich bekannter Weise ausgebildet ist und in welchem die Kakaobutter 21 einer Scher-/Dehnströmungsbehandlung ausgesetzt wird. Der Scherkristallisator 24 arbeitet mechanisch/thermisch, so dass hier in der Kakaobutter 21 Kristalle gebildet werden. Die Kristalle sind in der Kakaobutter suspendiert. Die Suspension bzw. Kakaobutter 21 wird fortwährend bzw. mehrfach umgewälzt und gelangt so immer wieder in den Vorratstank 20 zurück. Damit wird auch die notwendige Verweilzeit zur Verfügung gestellt, damit sich die gewünschte stabile Kristallmodifikation ausbilden und anreichern kann. Um die Kakaobutter 21 immer wieder zu durchmischen, ist ein Rührwerk 25 vorgesehen. In dem Vorratstank 20 wird eine Menge Kakaobutter 21, die die gewünschten stabilen Kristalle enthält, als Suspension hergestellt und vorrätig gehalten. Von dem Vorratstank 20 führt eine Leitung 26, in der ein Ventil 27 angeordnet ist, zu einem Rührwerkstank 28, der ebenfalls mit einem Rührwerk 29 ausgestattet ist. Der Rührwerkstank 28 besitzt einen Niveauschalter 30, der über eine elektrische Leitung 31 das Ventil 27 steuert. Bei Unterschreiten des durch den Niveauschalter 30 festgelegten Niveaus wird das Ventil 27 geöffnet, so dass auf diese Weise eine bestimmte Menge Kakaobutterkristallsuspension 32 in dem Rührwerkstank 28 bevorratet ist bzw. immer wieder ergänzt werden kann. Von dem Rührwerkstank 28 führt eine Leitung 33 mit Pumpe 34 zu dem zweiten Eingang des statischen Mischers 19. In dem Mischer 19 bzw. mit dessen Hilfe wird die Teilmenge Schokolade der Leitung 9 und die entsprechend dosierte Menge der Kakaobutterkristallsuspension 32 miteinander in Verbindung gebracht und intensiv durchmischt, so dass damit aus der Vorsuspension der Kakaobutter die Suspension der Kristalle in der Teilmenge der Schokolade gebildet wird. Diese Suspension wird dann über das Einweg-Impfventil 9 der Schokolademasse zugeführt.

### ZUGSZEICHENLISTE

- 1 -: Temperiermaschine
- 2 -: Kühlstufe
- 3 -: Mischstufe
- 4 -: Tank
- 5 -: Schokolademasse
- 6 -: Förderleitung
- 7 -: Förderpumpe
- 8 -: Leitung
- 9 -: Einweg-Impfventil
- 10 -: Dosierpumpe
- 11 -: offener Mischer
- 12 -: Mischwerkzeuge
- 13 -: Trichter
- 14 -: Pfeil
- 15 -: Dosierpumpe
- 16 -: statischer Mischer
- 17 -: Umschaltventil
- 18 -: Wärmetauscher
- 19 -: Mischer
- 20 -: Vorratstank
- 21 -: Kakaobutter
- 22 -: Leitung
- 23 -: Pumpe
- 24 -: Scherkristallisator
- 25 -: Rührwerk
- 26 -: Leitung
- 27 -: Ventil
- 28 -: Rührwerkstank
- 29 -: Rührwerk
- 30 -: Niveauschalter
- 31 -: el. Leitung
- 32 -: Kakaobutterkristallsuspension
- 33 -: Leitung
- 34 -: Pumpe

## Patentansprüche

1. Verfahren zum kontinuierlichen Aufbereiten von zu verarbeitender Schokolademasse, indem thermisch behandelte Impfkristalle in einer Masse suspendiert werden und diese Impfkristalle enthaltende Suspension der vorgekühlten Schokolademasse hinzugefügt und mit dieser schonend, homogen und kontinuierlich vermischt wird, **dadurch gekennzeichnet, dass** die Impfkristalle in einer Teilmenge der Schokolademasse suspendiert werden.

2. Verfahren nach Anspruch 1, **dadurch gekennzeichnet, dass** die Impfkristalle durch eine Scher-/Dehnströmungsbehandlung von Kakaobutter erzeugt werden und diese Kakaobutterkristallsuspension in der Teilmenge der Schokolade suspendiert wird.

3. Verfahren nach Anspruch 1 oder 2, **dadurch gekennzeichnet, dass** die Suspension mit Impfkristallanteilen > 0,2 %, bezogen auf die Gesamtmasse, eingesetzt wird.

4. Verfahren nach Anspruch 1, 2 oder 3, **dadurch gekennzeichnet, dass** die Suspension einer solchen Teilmenge der Schokolademasse hinzugefügt wird, die bereits Impfkristalle enthält.

5. Verfahren nach Anspruch 1 oder 2, **dadurch gekennzeichnet, dass** die Schokolademasse vor der Hinzufügung der Impfkristalle enthaltenden Suspension lediglich auf etwa 31 °C bis 35 °C, insbesondere 32 °C bis 34,5 °C, gekühlt wird.

6. Verfahren nach einem der Ansprüche 1 bis 5, **dadurch gekennzeichnet, dass** die homogene Vermischung der Impfkristalle enthaltenden Suspension mit der Schokolademasse ohne nennenswerte Änderung der Temperatur erfolgt.

7. Vorrichtung zum kontinuierlichen Aufbereiten von zu verarbeitender Schokolademasse, mit einem Tank (4) für flüssige erwärmte Schokolademasse (5), einer eine Förderpumpe (7) aufweisenden Förderleitung (6) für die Schokolademasse (5), die vom Tank (4) zu einem Verbraucher führt und in der ein Wärmetauscher angeordnet ist, und mit einer eine Dosierpumpe (10) aufweisenden Leitung (8) für die kontinuierliche Einbringung einer Impfkristalle enthaltenden Suspension in die Förderleitung (6) für die Schokolademasse (5), **dadurch gekennzeichnet, dass** als Wärmetauscher eine herkömmliche Temperiermaschine (1) mit einer im wesentlichen nur eine Kühlstufe (2) und eine Mischstufe (3) bereitstellenden Steuerung vorgesehen ist, und dass die die Dosierpumpe (10) aufweisende Leitung (8) für die kontinuierliche Einbringung der Impfkristalle enthaltenden Suspension in die Förderleitung (6) für die Schokolademasse (5) ausgangsseitig an den Beginn der Mischstufe (3) der herkömmlichen Temperiermaschine (1) angeschlossen ist.

8. Vorrichtung nach Anspruch 7, **dadurch gekennzeichnet, dass** die Leitung (8) für die kontinuierliche Einbringung der Suspension in die Förderleitung (6) für die Schokolademasse (5) Bestandteil eines Kreislaufs ist, in dem bei mehrfachem Durchlauf eine Anreicherung der Impfkristalle erfolgt.

9. Vorrichtung nach Anspruch 7 oder 8, **dadurch gekennzeichnet, dass** die Leitung (8) für die kontinuierliche Einbringung der Suspension in die Förderleitung (6) für die Schokolademasse (5) eingangsseitig an den Teil der Förderleitung (6) angeschlossen ist, der von der Temperiermaschine (1) zum Verbraucher führt.

10. Vorrichtung nach Anspruch 7, **dadurch gekennzeichnet, dass** die Leitung (8) für die kontinuierliche Einbringung der Suspension in die Förderleitung (6) für die Schokolademasse (5) eingangsseitig an das Ende der Kühlstufe (2) der Temperiermaschine (1) angeschlossen ist.

11. Vorrichtung nach Anspruch 7, **dadurch gekennzeichnet, dass** die Leitung (8) für die kontinuierliche Einbringung der Suspension in die Förderleitung (6) für die Schokolademasse (5) eingangsseitig an den Tank (4) für die flüssige erwärmte Schokolademasse (5) angeschlossen ist.

12. Vorrichtung nach Anspruch 7, **dadurch gekennzeichnet, dass** in der Leitung (8) für die kontinuierliche Einbringung der Suspension in die Förderleitung (6) für die Schokolademasse (5) ein offener Mischer (11), eine weitere Dosierpumpe (15) und ein statischer Mischer (16) vorgesehen sind.

## Claims

1. , Method for continuous treatment of a chocolate mass to be processed, comprising the steps of:
suspending thermally treated seed crystals in a mass and adding this suspension containing the seed crystals to the pre-cooled chocolate mass and mixing the suspension with the chocolate mass in a gentle, homogeneous and continuous way, **characterized in that** the seed crystals are suspended in a partial mass of the chocolate mass.

2. Method of claim 1, **characterized in that** the seed crystals are produced by a shearing/extensional flow treatment of cocoa butter and this suspension of crystals of the cocoa butter is suspended in the partial mass of the chocolate.

3. Method of claim 1 or 2, **characterized in that** the suspension includes more than 0.2 percent of seed crystals with respect to the entire chocolate mass.

4. Method of daim 1, 2 or 3, **characterized in that** the chocolate mass to which the suspension is added already includes seed crystals.

5. Method of claim 1 or 2, **characterized in that** the chocolate mass before having added the suspension containing the seed crystals has a temperature of approximately 31 °C to approximately 35 °C, especially of approximately 32 °C to approximately 34,5 °C.

6. Method of one of the claims 1 to 5, **characterized in that** the suspension containing the seed crystals and the chocolate mass are homogeneously intermixed without substantial changes of temperature.

7. Apparatus for continuous treatment of a chocolate mass to be processed, comprising:
a tank (4) being designed and arranged to store liquid heated chocolate mass (5),
a conveying conduit (6) including a conveying pump (7) for the chocolate mass (5), the conduit being designed and arranged to connect the tank (4) with a consumer and including a heat exchanger,
a conduit (8) including a dose pump (10) being designed and arranged to continuously introduce a suspension containing seed crystals into the conveying conduit (6) for the chocolate mass (5), **characterized in that**
a known tempering machine (1) serving as the heat exchanger is provided including controlling and having substantially only one cooling stage (2) and a mixing stage (3),
and **in that** the end of the conduit (8) including the dose pump (10) serving for the continuous introduction of the suspension containing the seed crystals into the conveying conduit (6) for the chocolate mass (5) is connected to the beginning portion of the mixing stage (3) of the known tempering machine (1).

8. Apparatus of claim 7, **characterized in that** the conduit (8) being designed and arranged for the continuous introduction of the suspension into the conveying conduit (6) for the chocolate mass (5) is part of a circuit being designed and arranged to pass the suspension through the circuit for a plurality of times to increase the amount of seed crystals.

9. Apparatus of claim 7 or 8, **characterized in that** the conduit (8) being designed and arranged for the continuous introduction of the suspension into the conveying conduit (6) for the chocolate mass (5) includes an entrance being connected to the part of the conveying conduit (6) between the tempering machine (1) and the consumer.

10. Apparatus of claim 7, **characterized in that** the conduit (8) being designed and arranged for the continuous introduction of the suspension into the conveying conduit (6) for the chocolate mass (5) includes an entrance being connected to the end of the cooling stage (2) of the tempering machine (1).

11. Apparatus of claim 7, **characterized in that** the conduit (8) being designed and arranged for the continuous introduction of the suspension into the conveying conduit (6) for the chocolate mass (5) includes an entrance being connected to the tank (4) for the liquid warmed chocolate mass (5).

12. Apparatus of claim 7, **characterized in that** the conduit (8) being designed and arranged for the continuous introduction of the suspension into the conveying conduit (6) for the chocolate mass (5) comprises an open mixing unit (11), a second dose pump (15) and a static mixing unit (16) all being located in the conduit (8).

## Revendications

1. Procédé de préparation continue d'une pâte de chocolat à traiter, par mise en suspension dans une pâte de germes cristallins traités thermiquement et ajout de cette suspension contenant des germes cristallins à la pâte de chocolat pré-refroidie, et malaxage délicat, homogène et continu de cette pâte, **caractérisé en ce que** les germes cristallins sont mis en suspension dans une quantité partielle de la pâte de chocolat.

2. Procédé selon la revendication 1, **caractérisé en ce que** les germes cristallins sont produits par un traitement avec courant de cisaillement/d'étirement de beurre de cacao et cette suspension de cristaux de beurre de cacao est mise en suspension dans la quantité partielle de chocolat.

3. Procédé selon la revendication 1 ou 2, **caractérisé en ce que** la suspension est utilisée avec une proportion de germes cristallins supérieure à 0,2 % par rapport à la masse globale.

4. Procédé selon la revendication 1, 2 ou 3, **caractérisé en ce que** la suspension est ajoutée à une quantité partielle de pâte de chocolat qui contient déjà des germes cristallins.

5. Procédé selon la revendication 1 ou 2, **caractérisé en ce qu'**avant l'ajout de la suspension contenant des germes cristallins, la pâte de chocolat est refroidie uniquement à environ 31 °C à 35 °C, en particulier à 32 °C à 34,5 °C.

6. Procédé selon l'une des revendications 1 à 5, **caractérisé en ce que** le malaxage homogène de la suspension contenant des germes cristallins avec la pâte de chocolat s'effectue sans variation notable de la température.

7. Dispositif de préparation continue d'une pâte de chocolat à traiter, comportant un réservoir (4) pour la pâte de chocolat (5) chauffée liquide, une conduite de transport (6) comportant une pompe de circulation (7) pour la pâte de chocolat (5), laquelle mène du réservoir (4) à un récepteur et dans laquelle est disposé un échangeur de chaleur, et comportant une conduite (8) avec une pompe de dosage (10) pour l'introduction continue d'une suspension contenant des germes cristallins dans la conduite de transport (6) pour la pâte de chocolat (5), **caractérisé en ce qu'**il est prévu comme échangeur de chaleur une machine de maintien en température (1) classique avec une commande ne fournissant pour l'essentiel qu'un étage de refroidissement (2) et un étage de malaxage (3), et **en ce que** la conduite (8), comportant la pompe de dosage (10), pour l'introduction continue de la suspension contenant des germes cristallins dans la conduite de transport (6) pour la pâte de chocolat (5), est raccordée côté sortie au début de l'étage de malaxage (3) de la machine de maintien en température (1) classique.

8. Dispositif selon la revendication 7, **caractérisé en ce que** la conduite (8) pour l'introduction continue de la suspension dans la conduite de transport (6) pour la pâte de chocolat (5), fait partie intégrante d'un circuit dans lequel s'effectue un enrichissement des germes cristallins par passages multiples.

9. Dispositif selon la revendication 7 ou 8, **caractérisé en ce que** la conduite (8) pour l'introduction continue de la suspension dans la conduite de transport (6) pour la pâte de chocolat (5), est raccordée côté entrée à la partie de la conduite de transport (6) qui mène de la machine de maintien en température (1) au récepteur.

10. Dispositif selon la revendication 7, **caractérisé en ce que** la conduite (8) pour l'introduction continue de la suspension dans la conduite de transport (6) pour la pâte de chocolat (5), est raccordée côté entrée à l'extrémité de l'étage de refroidissement (2) de la machine de maintien en température (1).

11. Dispositif selon la revendication 7, **caractérisé en ce que** la conduite (8) pour l'introduction continue de la suspension dans la conduite de transport (6) pour la pâte de chocolat (5), est raccordée côté entrée au réservoir (4) pour la pâte de chocolat (5) chauffée liquide.

12. Dispositif selon la revendication 7, **caractérisé en ce que** dans la conduite (8) pour l'introduction continue de la suspension dans la conduite de transport (6) pour la pâte de chocolat (5) sont prévus un malaxeur (11) ouvert, une autre pompe de dosage (15) et un malaxeur statique (16).
